Europäisches Patentamt

European Patent Office

Office européen des brevets

(11) Veröffentlichungsnummer: **0 460 453 A2**

## (12) EUROPÄISCHE PATENTANMELDUNG

(21) Anmeldenummer: **91108253.5**

(22) Anmeldetag: **22.05.91**

(51) Int. Cl.$^5$: **H02J 7/35, B63H 19/00**

(30) Priorität: **02.06.90 DE 4017860**

(43) Veröffentlichungstag der Anmeldung:
**11.12.91 Patentblatt 91/50**

(84) Benannte Vertragsstaaten:
**AT BE CH DE DK ES FR GB GR IT LI NL SE**

(71) Anmelder: **Schottel-Werft Josef Becker GmbH & Co KG.**

**W-5401 Spay/Rhein(DE)**

(72) Erfinder: **Schaffrin, Christian**
**In der Gebhardsösch 11**
**W-7750 Konstanz(DE)**
Erfinder: **Borgmeyer, Johannes**
**Bergstrasse 12**
**W-7705 Steisslingen(DE)**

(74) Vertreter: **Walter, Helmut, Dipl.-Ing.**
**Aubinger Strasse 81**
**W-8000 München 60(DE)**

(54) **Energiegewinnungsanlage, insbesondere Propeller-Schiffsantrieb, mit Speisung durch einen Solargenerator.**

(57) Gegenstand der Erfindung ist eine Energiegewinnungsanlage, bei der elektrische Energie von einem Solargenerator über einen Gleichspannungswandler geliefert wird. Die Erfindung ist dadurch gekennzeichnet, daß mit Hilfe eines Mikrocomputers (7,8,9) der Eingangswiderstand des Gleichspannungswandlers (5) dem sich abhängig von der solaren Einstrahlung und der Solarzellentemperatur ändernden optimalen Betriebspunkt MPP ( = Maximum Power Point) des Solargenerators (6) laufend angepaßt wird.

EP 0 460 453 A2

Die Erfindung bezieht sich auf eine Energiegewinnungsanlage mit Speisung durch einen Solargenerator, wobei die Energiegewinnungsanlage insbesondere ein Schiffsantrieb mit einem Propeller sein, und die Anlage die Merkmale gemäß dem Gattungsbegriff des Anspruchs 1 aufweisen soll. Im vorzugsweisen Fall kann der Propeller eine dem Vortrieb des Wasserfahrzeugs unmittelbar dienende Schiffsschraube sein oder sie kann das Laufrad eines Pumpjets sein, mit dem Wasser so beschleunigt und zum Austritt aus dem Gehäuse gebracht wird, daß der aus dem Gehäuse austretende Wasserstrahl den Vortrieb des Wasserfahrzeugs bewirkt. Durch Richtungsänderung des aus dem Gehäuse austretenden Wasserstrahls kann im letzten Fall mit dem Wasserstrahl nicht nur der Vortrieb des Wasserfahrzeugs bewirkt, sondern auch dessen Fahrtrichtung bestimmt werden.

Solche Antriebssysteme, auf die sich die Erfindung vorzugsweise bezieht, sind allgemein bekannt und sie werden auch angewendet.

Bekannt ist es auch, bei der Energiegewinnung schlechthin Solargeneratoren einzusetzen, bei denen photovoltaische Solarzellen Licht in elektrische Energie umwandeln.

Wird zum Antrieb insbesondere kleinerer Wasserfahrzeuge ein photovoltaischer Solargenerator eingesetzt, so ist auf einen möglichst hohen Wirkungsgrad der verwendeten Komponenten zu achten, um einerseits den Flächenbedarf des Solargenerators und andererseits das Gewicht von Energiespeicher, Motor und Antrieb so gering wie möglich zu halten. Es soll mit anderen Worten ein insgesamt möglichst effizientes Antriebssystem zur Verfügung stehen.

Demzufolge ist es Aufgabe der Erfindung, ein photovoltaisches Energiekonzept zu schaffen, das dem Solargenerator die maximale elektrische Leistung entnimmt und somit eine optimale Energieausbeute gewährleistet. Hierzu ist es notwendig, den Solargenerator im optimalen Betriebspunkt, dem MPP (= Maximum Power Point) zu betreiben und dies soll mit der Erfindung gewährleistet werden, ohne daß der Aufwand für die Gewährleistung des Betriebes im optimalen Betriebspunkt (= MPP) wirtschaftlich unvertretbar würde.

Die Merkmale gemäß der Erfindung zur Lösung dieser Aufgabe ergeben sich aus den Patentansprüchen, wobei die durch die Patentansprüche definierte Erfindung nachfolgend anhand der Zeichnung erläutert wird.

Kern der Erfindung ist es demzufolge, den optimalen Betriebspunkt abhängig von den beiden Einflußgrößen "Stärke der solaren Einstrahlung" und "Temperatur am Solargenertor" zu bestimmen und diesen Arbeitspunkt durch Anpassung des Eingangswiderstands eines Gleichspannungswandlers zum Aufladen eines Energiespeichers für die Bereitstellung der Leistung für den Elektromotor beispielsweise eines Schiffspropellers mittels eines Rechners einzustellen.

Damit sind die entscheidenden Einflußgrößen berücksichtigt und es findet eine für den praktischen Betrieb optimale Nutzung der Photovoltaik zum Antrieb eines Wasserfahrzeuges statt.

In der Zeichnung, anhand deren die nachfolgende nähere Beschreibung der Erfindung erfolgt, zeigen

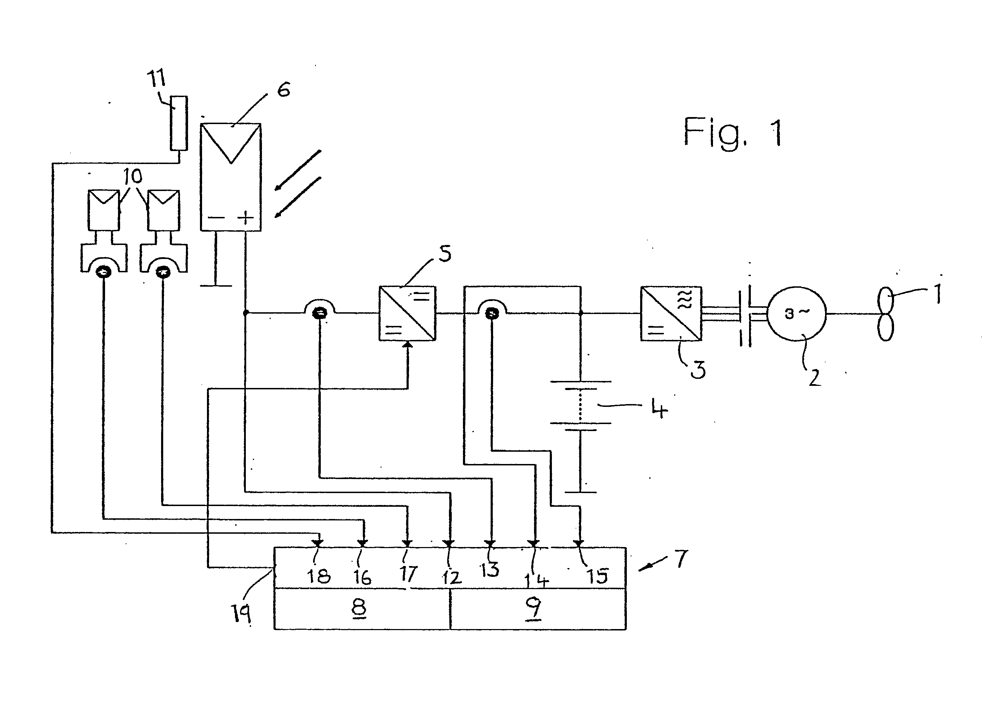

Fig. 1   ein Systembild der Komponenten, die für ein photovoltaisches Bootskonzept und für das optimale Energiemanagement notwendig sind und

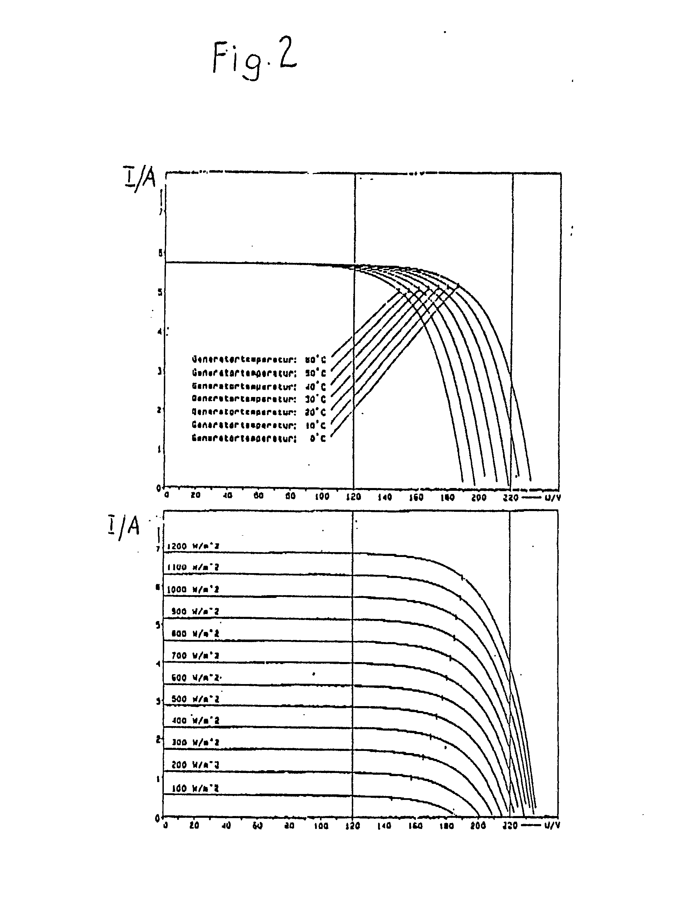

Fig. 2   Generatorkennlinien mit Arbeitsbereich des Gleichspannungswandlers, wie er als Bestandteil der Erfindung zur Anwendung kommt.

Dem Antrieb eines selbst nicht dargestellten Wasserfahrzeuges dient ein Propeller 1 in Einzelanordnung oder der Propeller 1 als einer von mehreren gleichartigen Propellern. Der Propeller 1 ist auf der Antriebswelle eines Elektromotors 2 drehfest angeordnet, dem elektrische Energie von einem Wechselrichter 3 zugeführt wird. Der Wechselrichter 3 entnimmt die elektrische Energie einer Anzahl von Batterien 4, die als Energiespeicher des Systems dienen. Diese-Batterien 4 werden mittels eines Gleichspannungswandlers 5 mit elektrischer Energie geladen, die mittels eines Solargenerators 6 mit einer Mehrzahl von Solarzellen gewonnen und eingespeist wird.

Diesem System ist ein Mikrocomputer 7 mit Grenzwertspeicher 8 und Datenfeld 9 zugeordnet, dem als Eingangsgrößen die Generatorspannung als Signal 12, der Generatorstrom als Signal 13, die Batteriespannung als Signal 14, der Batterieladestrom als Signal 15, die Meßwerte der Pilotzellen 10, die der Messung der solaren Einstrahlung dienen, als Signal 16 und 17 und der Meßwert des Temperaturfühlers 11 am Solargenerator als Signal 18 zugeführt werden. Aus der Verarbeitung dieser Signale im Mikrocomputer 7, der einen Grenzwertspeicher 8 und ein Datenfeld 9 enthält, wird ein Steuersignal 19 gewonnen, das dem Gleichspannungswandler zugeführt wird.

Der Eingangswiderstand des Gleichspannungswandlers kann in einem bestimmten Arbeitsbereich frei eingestellt werden, die Ausgangsspannung folgt der Spannung der angeschlossenen Batterie bis zur Ladeschlußspannung.

Über einen Steuereingang wird der Eingangswiderstand eingestellt.

Dieser Steuereingang bildet die Schnittstelle zu einem übergeordneten Mikrocomputersystem. Der Mikrocomputer wird mit Informationen von verschiedenen Meßstellen im System versorgt.

Bedingt durch die nicht lineare Kennlinie des Solargenerators, die sich zudem ständig verändert, auch in ihrer Form, ist eine Sollwertvorgabe für den Aufbau eines geschlossenen Regelkreises mit dem Gleichspannungswandler als Stellglied nicht möglich.

Bei dem nachfolgend beschriebenen Verfahren wird ein Steueralgorithmus entwickelt und programmiert, der durch sukzessive Optimierung den Solargenerator im optimalen Betriebspunkt, dem MPP, betreibt.

Bei diesem Verfahren werden am Ausgang des Gleichspannungswandlers die Spannungs- und Stromwerte gemessen und dem Mikrocomputer zugeführt. Aus diesen Werten wird die Leistung errechnet, die der Gleichspannungswandler an den Energiespeicher abgibt. Es gilt nun, diese Leistung zu maximieren, um eine optimale Leistungs- und somit Energieausbeute des Solargenerators zu erhalten.

Wird das System in Betrieb genommen, so wird der Wert des Steuersignals vom Mikrocomputer auf einen Anfangswert gestellt und somit auch der Eingangswiderstand des Gleichspannungswandlers. Da die Lage des gültigen MPP nicht bekannt ist, kann nicht vorgegeben werden, auf welchen Wert das Steuersignal und somit der Eingangswiderstand des Gleichspannungswandlers verändert werden muß. Mit der größten Schrittweite w wird nun der Wert des Steuersignals erhöht und es werden erneut Spannung und Strom gemessen und die Leistung ermittelt. Wird die Leistung größer, ist die Suchrichtung richtig und der Wert des Steuersignals wird erneut um die Schrittweite w erhöht und erneut werden Spannung und Strom gemessen. Wird die Leistung kleiner, ist die Suchrichtung falsch und der Wert des Steuersignals wird um die Schrittweite w verkleinert. Es werden erneut Spannung und Strom gemessen und die errechnete Leistung wird mit dem vorgegebenen Wert verglichen.

Durch die große Schrittweite w wird die Kennlinie des Solargenerators schnell durchlaufen. Außerdem wird gewährleistet, daß eventuelle lokale Maxima übersprungen werden und der Bereich des absoluten Maximums erfaßt wird.

Hat nun der Arbeitspunkt den MPP überschritten, so wird die Suchrichtung umgekehrt und der MPP in entgegengesetzte Richtung überschritten. Der Arbeitspunkt pendelt so um den tatsächlichen MPP herum. Bedingt durch die große Schrittweite ist der Arbeitspunkt noch relativ weit vom tatsächlichen MPP entfernt. Wird nun, wie zuvor beschrieben, der MPP in beide Richtungen einmal überschritten, so wird die Schrittweite w halbiert und die Optimierung weitergeführt. Diese Halbierung der Schrittweite wird bis zur kleinsten möglichen Schrittweite fortgeführt und somit der Arbeitspunkt so nahe wie möglich an den MPP herangeführt.

Ändert sich die Leistungsausbeute nicht, bleibt also die Lage des MPP stabil, so pendelt der tatsächliche Arbeitspunkt, bedingt durch die Diskretisierung des Wertes des Steuersignals, mit der kleinsten möglichen Schrittweite um den MPP herum, der MPP kann also nicht exakt erfaßt werden. Es wird ein Bereich der maximalen Leistung erfaßt, wobei das wirkliche Maximum in der Mitte liegt.

Es wird nun ein Grenzwertspeicher eingeführt, in dem die beiden letzten Umkehrpunkte des Bereiches der maximalen Leistung gespeichert werden. Somit ist immer Lage und Ausdehnung des Bereiches bekannt, in dem der MPP liegen muß. Am Ende eines Suchvorganges, also bei minimaler Schrittweite, wird, solange die Leistungsausbeute konstant bleibt, der Suchvorgang abgebrochen und aus den beiden Grenzwerten des letzten gültigen Bereiches der maximalen Leistung der arithmetische Mittelwert berechnet. Dieses arithmetische Mittel ist der Wert für das Steuersignal des momentanen MPP und wird am Gleichspannungswandler eingestellt.

Der Suchvorgang bleibt solange ausgeschaltet, bis sich die Leistungsausbeute um einen festzulegenden Wert ändert, die Lage des MPP sich also verändert. Um bei geringfügigen Veränderungen möglichst schnell eine exakte Einstellung des neuen MPP zu erreichen, wird der Suchvorgang mit der kleinsten Schrittweite fortgeführt, erst nach einer festzulegenden Anzahl von Suchschritten in die gleiche Richtung wird die Schrittweite verdoppelt, maximal bis zur größten Schrittweite w. Um im weiteren Betrieb den Optimierungsvorgang zu beschleunigen, werden die gefundenen MPP in einem Datenfeld abgelegt. Für die Beschreibung des MPP wird zum einen der Wert des Steuersignals, zum anderen werden die Werte der solaren Einstrahlung und die Generatortemperatur als die entscheidenen Einflußgrößen für die Lage des MPP benötigt.

Die solare Einstrahlung wird mit Hilfe zumindest einer sogenannten Pilotzelle 10 bestimmt. Eine solche Pilotzelle ist eine genau vermessene Referenzzelle, die im Kurzschluß betrieben wird. Der Kurzschlußstrom ist ein direktes Maß für die Größe der solaren Einstrahlung, die von einem photovoltaischen Solargenerator auch tatsächlich verarbeitet werden kann. Die Pilotzelle ist bezüglich der Solareinstrahlung in gleicher Lage wie der Solargenerator in dessen unmittelbarer Nähe installiert, so daß gleiche Einstrahlungsvoraussetzungen angenommen werden können. Aus Redundanzgründen empfiehlt es sich, mindestens zwei Pilotzellen 10 zu verwenden.

Die Generatortemperatur wird mit Temperaturfühlern 11 gemessen, die rückseitig an verschiedenen Stellen des Solargenerators aufgeklebt sind.

Diese Werte werden ebenfalls dem Mikrocomputer 7 zugeführt, so daß zu jedem Betriebspunkt die gemessene Einstrahlung und Temperatur des Solargenerators mit angegeben werden können.

Jeder gefundene MPP, wobei ein MPP dann als gefunden gilt, wenn der Suchvorgang abgebrochen werden konnte, wird in das Datenfeld abgelegt. In das Feldelement wird dabei der Wert des Steuersignals für diesen MPP abgelegt, die Indexwerte für die Bestimmung des Feldelementes sind der Wert der solaren Einstrahlung und die Generatortemperatur.

Die Indexwerte "Kurzschlußstrom" als Maß für die solare Einstrahlung werden als Absolutwerte in das Datenfeld abgelegt, die Indexwerte "Generatortemperatur" hingegen werden als Relativwerte zur aktuellen Generatortemperatur abgelegt und auf einen Temperaturbereich von +/-X°C zu dieser beschränkt. Es wird somit ein Temperaturfenster bestimmter Größe festgelegt. MPP-Werte außerhalb dieses Temperaturfensters werden gelöscht, so daß bedingt durch die Temperaturschwankungen ungültige MPP-Werte aus dem Datenfeld verschwinden und durch gültige Werte ersetzt werden und somit die Alterung des Generators oder anderer relevanter Systemkomponenten automatisch berücksichtigt wird.

Wird nun der Suchvorgang gestartet, bzw. erneut gestartet, so sucht der Mikrocomputer in dem angelegten MPP-Datenfeld nach einem für die momentane Temperatur und Einstrahlung gültigen MPP-Wert, d.h. Wert des Steuersignals. Kann er einen solchen finden, so wird sofort der Wert des Steuersignals eingestellt und somit der Generator im MPP betrieben, der Suchvorgang entfällt. Liegt kein gültiger MPP-Wert vor, so muß der MPP nach dem oben beschriebenen Verfahren gesucht werden.

Um nun zu verhindern, daß durch Abschattungen oder Teilabschattungen des Solargenerators oder der Pilotzellen falsche Werte in das MPP-Datenfeld geschrieben werden, wird vor jedem Eintrag eine Plausibilitätsprüfung durchgeführt.

Anhand der Kennlinienfelder eines Solargenerators kann mit dem Kurzschlußstrom der Pilotzellen und der Generatortemperatur als Eingangsgrößen die zu erwartende Leistung im MPP mit einer Genauigkeit von +/- 10% errechnet werden. Für die MPP-Steuerung ist dies zu ungenau, für eine Plausibilitätsprüfung jedoch völlig ausreichend.

Vor jedem Eintrag eines vermeintlichen MPP's in das Datenfeld wird die tatsächliche Generatorleistung, berechnet aus Generatorspannung und Generatorstrom, mit der zu erwartenden Leistung anhand der zuvor erwähnten Rechnung verglichen. Weicht die tatsächliche Leistung nicht mehr als 10% von der errechneten ab, so ist der Wert plausibel und wird in das Datenfeld eingetragen, anderenfalls wird der Suchvorgang fortgesetzt.

Diese Plausibilitätsprüfung wird ebenfalls durchgeführt, bevor der Wert eines Steuersignals anhand der Tabellenwerte eingestellt wird. Dadurch wird verhindert, daß aufgrund von Abschattungen der Pilotzelle oder des Solargenerators ein falscher Arbeitspunkt eingestellt wird.

Wird bei Volladung der Batterie die Ladeschlußspannung erreicht, so wird der Eingangswiderstand des Gleichspannungswandlers in Richtung Leerlauf des Solargenerators gefahren, um eine Überladung der Batterien zu verhindern. Der Mikrocomputer hat jetzt keine Möglichkeit mehr, den MPP zu suchen und einzustellen. Bei Erreichen der Ladeschlußspannung wird deshalb das Eintragen vermeintlicher MPP-Werte in das Datenfeld verhindert.

Es ist ersichtlich, daß die mit Hilfe der beschriebenen Anlage gewonnene und in den Batterien 4 gespeicherte Energie nicht nur dem Antrieb eines dem Antrieb eines Schiffes dienenden Propellers 1 dienen kann, obwohl sich * insbesondere die konkrete Aufgabenstellung ableitet. Die Erfindung kann jedoch durchaus auch in Verbindung mit einer landgestützten Anlage Anwendung finden. Hierbei ist dann der Wechselrichter 3 nicht an den Elektromotor 2 des Propellers 1 gekoppelt, sondern es erfolgt beispielsweise unter Entfall der Batterien 4 eine Netzeinspeisung. Es erfolgt beispielsweise die Stromversorgung eines Verbrauchers ohne Netzanschluß, wobei die Anlage rationell arbeitet, weil sie im Hinblick auf die praktischen Bedürfnisse immer im optimalen Betriebspunkt arbeitet.

## Patentansprüche

1. Energiegewinnungsanlage, bei der elektrische Energie von einem Solargenerator über einen Gleichspannungswandler geliefert wird, **dadurch gekennzeichnet**, daß mit Hilfe eines Mikrocomputers (7,8,9) der Eingangswiderstand des Gleichspannungswandlers (5) dem sich abhängig von der solaren Einstrahlung und der Solarzellentemperatur ändernden optimalen Betriebspunkt MPP (= Maximum Power Point) des Solargenerators (6) laufend angepaßt wird.

2. Energiegewinnungsanlage nach Anspruch 1, **gekennzeichnet** durch Meßwertgeber für Spannung (14) und Strom (15) am Ausgang des Gleichspannungswandlers, zur Berechnung der an den Energiespeicher abgegebenen Leistung im Mikrocomputer (7) und **gekennzeichnet** weiter durch einen Steuersignalgeber (19) im Mikrocomputer (7), der bei

*) aus dem

Veränderung der aus Spannung (14) und Strom (15) errechneten Leistung um einen bestimmten Betrag den Eingangswiderstand des Gleichspannungswandlers (5) so verändert, daß der Arbeitspunkt dem MPP entspricht.

3. Energiegewinnungsanlage nach Anspruch 1 und 2, **dadurch gekennzeichnet**, daß bei Inbetriebnahme des Systems und bei Veränderung der vom Gleichspannungswandler (5) an den Energiespeicher (4) abgegebenen Leistung, gemessen mit den Meßwertgebern (14) und (15), ein Suchvorgang durch Verändern des Steuersignals (19) eingeleitet wird, wobei Richtung und Schrittweite veränderlich sind, um in einem vorgegebenen Arbeitsbereich den optimalen Arbeitspunkt des Solargenerators (6) zu erreichen.

4. Energiegewinnungsanlage nach Anspruch 1 bis 3, **dadurch gekennzeichnet**, daß der Mikrocomputer (7) einen Grenzwertspeicher enthält (8), mit dessen Hilfe der kleinste mögliche Bereich der maximalen Leistung des Solargenerators und als arithmetischer Mittelwert der Grenzpunkte dieses Bereiches der genaue Wert des MPP ermittelt wird und das Steuersignal (19) auf diesen Wert eingestellt wird.

5. Energiegewinnungsanlage nach Anspruch 1 bis 4, **dadurch gekennzeichnet**, daß der Mikrocomputer (7) ein Datenfeld (9) enthält, in welchem die im Betrieb gefundenen MPP-Werte, dargestellt durch die Werte für das Steuersignal und festgelegt durch die Werte für solare Einstrahlung, gemessen an Pilotzellen (10), und die Werte für die Temperatur des Solargenerators, gemessen mit Temperaturfühlern (14), gespeichert werden und bei einer neuerlichen Einleitung des Suchvorgangs das Steuersignal (19) sofort auf den für die momentane solare Einstrahlung und Generatortemperatur gültigen, dem MPP entsprechenden Wert eingestellt wird.

6. Energiegewinnungsanlage nach Anspruch 1 bis 5, **dadurch gekennzeichnet**, daß die Werte für die Generatortemperatur (18), gemessen mit Temperaturfühlern (11), nur in einem festzulegenden Bereich +/- X°C zur momentanen Generatortemperatur als Indexwerte für die gefundenen MPP-Werte in dem Datenfeld (9) gespeichert bleiben und daß gefundene MPP-Werte, deren Temperaturwerte aus diesem Bereich herausfallen, ebenfalls gelöscht werden, so daß, bedingt durch Temperaturschwankungen des Generators, alte und eventuell ungültige MPP-Werte gelöscht werden und somit die Alterung des Solargenerators oder anderer wichtiger Systemkomponenten erfaßt und selbsttätig ausgeglichen wird.

7. Energiegewinnungsanlage nach Anspruch 1 bis 6, **dadurch gekennzeichnet**, daß vor jedem Eintrag der MPP-Werte in das Datenfeld (8) eine Plausibilitätsprüfung vom Mikrocomputer (7) durchgeführt wird durch Vergleich der anhand von solarer Einstrahlung und Generatortemperatur theoretisch errechneten Generatorleistung und der tatsächlichen Generatorleistung, errechnet aus den Werten der Generatorspannung (12) und des Generatorstroms (13) und daß Werte, die die Plausibilitätsprüfung nicht bestehen, nicht in das Datenfeld aufgenommen werden.

8. Energiegewinnungsanlage nach Anspruch 6, **dadurch gekennzeichnet**, daß die Plausibilitätsprüfung auch vor jedem Einstellen des Wertes des Steuersignals (19) anhand von Tabellenwerten durchgeführt wird, um zu verhindern, daß bei Abschattung von Pilotzelle oder Solargenerator ein falscher Arbeitspunkt eingestellt wird und daß bei Nichtbestehen der Plausibilitätsprüfung der Suchvorgang gestartet bzw. fortgeführt wird.

9. Verwendung einer Energiegewinnungsanlage in Verbindung einem Schiffsantrieb mit einem Propeller (1) und einem Elektromotor, der aus einem Engergiespeicher (Batterie 4) gespeist wird, dessen Ladeenergie vom Solargenerator (6) über den Gleichspannungswandler (5) geliefert wird.

10. Energiegewinnungsanlage nach zumindest einem der Ansprüche 1 bis 8 in der Anwendung gemäß Anspruch 9, **dadurch gekennzeichnet**, daß bei Erreichen der Ladeschlußspannung der Batterien (4) gemessen am Meßwertgeber (14), der Wert des Steuersignals (19) in Richtung Leerlaufspannung des Solargenerators (6) verändert wird.

11. Schiffsantrieb nach Anspruch 10, **dadurch gekennzeichnet**, daß bei Erreichen der Ladeschlußspannung der Batterien das Eintragen von Werten in das Datenfeld (9) verhindert wird.

Fig. 1

Fig. 2